# EUROPÄISCHE PATENTSCHRIFT

(11) **EP 0 541 922 B1**
(45) Veröffentlichungstag und Bekanntmachung des Hinweises auf die Patenterteilung: **09.07.1997**
(21) Anmeldenummer: 92115119.7
(22) Anmeldetag: 04.09.1992
(51) Int. Cl.: F01L 1/00, F01N 3/00, G01N 27/00, F02D 41/14, F01N 3/20

(54) **Verfahren und Vorrichtung zur katalytischen Nachverbrennung der Abgase einer Brennkraftmaschine**
Method and device for catalytic post-combustion of exhaust gas of an internal combustion engine
Procédé et dispositif de post-combustion catalytique des gaz d'échappement d'un moteur à combustion interne

(30) Priorität: 09.11.1991 DE 4136911
(43) Veröffentlichungstag der Anmeldung: 19.05.1993
(73) Patentinhaber: Keesmann, Till, D-69115 Heidelberg (DE)
(72) Erfinder: Keesmann, Till, D-69115 Heidelberg (DE)
(74) Vertreter: Clemens, Gerhard, Dr.-Ing.

(56) Entgegenhaltungen:
- EP-A- 0 025 752
- EP-A- 0 417 412
- EP-A- 0 422 432
- WO-A-89/10470
- DE-A- 4 039 876
- DE-A- 4 040 527
- JOURNAL OF PHYSICS E. SCIENTIFIC INSTRUMENTS Bd. 22, 1989, BRISTOL GB Seiten 693 - 699 M. H. WESTBROOK 'Future developments in automotive sensors and their systems'

## Beschreibung

Die Erfindung betrifft ein Verfahren zur katalytischen Nachverbrennung der Abgase einer mit mehreren Zylindern ausgestatteten Brennkraftmaschine, bei der die Abgase über, den einzelnen Zylinder zugeordnete Einzelleitungen, einer gemeinsamen Abgasleitung zugeleitet dann einer katalytischen Nachverbrennung unterworfen werden und der Sauerstoffgehalt der Abgase in den Einzelleitungen gemessen wird und in Abhängigkeit von den gewonnenen Meßwerten die Verbrennung in dem jeweils zugehörigen Zylinder angesteuert wird und eine Vorrichtung zur Ausübung dieses Verfahrens.

Aus "Zukunft: Ein Sensor pro Zylinder" abgedruckt in "mot Auto, Technik, Zukunft, Heft Nr. 20. vom 13.9.1991, Seite 101 - 102" ist ein Verfahren der eingangs genannten Art bekannt.

Die DE-A-4 040 527 zeigt ein Verfahren zur katalytischen Nachverbrennung der Abgase einer mit mehreren Zylindern ausgestatteten Brennkraftmaschine gemäß dem Oberbegriff des Anspruchs 1. Dabei wird die zeitliche Steuerung, wenn die Ausgangssignale aus den jeweiligen Sauerstoffsensoren abgetastet werden, in einen Ausschiebehub des zugeordneten Zylinders gelegt oder in eine Zeitspanne, die geringfügig später als dieser ist. Ein derartiges Luft-Brennstoff-Verhältnis-Steuersystem für Brennkraftmaschinen hält das Abgas aus den Zylindern auf einem theoretischen Luft-Brennstoff-Verhältnis.

In der EP-A-0 025 752 ist eine Vorrichtung zum Messen der Abgase einer mit mehreren Zylindern ausgestatteten Brennkraftmaschine bekannt, mit einem in einer Abgasleitung verschraubten Zwischenflansch, wobei in dem Zwischenflansch eine oder mehrere Meßleitungen für zugehörige, im Zwischenflansch angeordnete Meßsonden zur Vermessung des Abgasstromes verlegt sind.

Aufgabe der Erfindung ist es, die Eingriffsmöglichkeiten zur Steuerung der Verbrennung im Interesse einer besseren Ausnutzung des Brennstoffes und einer Vermeidung schädlicher Abgase zu verbessern.

Diese Aufgabe wird durch das Verfahren nach Anspruch 1 und die Vorrichtung nach Anspruch 9 gelöst. Der zeitliche Verlauf der Meßwerte in den Einzelleitungen für Temperatur t, Druck p, Strömungsgeschwindigkeit s, und für den Gehalt an Kohlenmonoxyd Co, Kohlenwasserstoff HC und/oder Wasserdampf H₂O, wird in zeitlicher Abhängigkeit vom Verbrennungstaktverlauf des jeweils zugeordneten Zylinders gemessen und zur Ansteuerung genutzt .

In einer Einzelleitung strömt nach jedem Verbrennungstakt eine Abgasportion, die von dem Zylinder ausgestoßen wird. Diese Portion hat sich beim Ausstoß noch nicht vollständig vermischt. An den Meßstellen strömt mithin Abgas vorbei, das zu unterschiedlichen Meßwerten führt. Aus dem zeitlichen Verlauf einzelner gemessener Meßwerte kann auf die Funktion und die Fehlfunktion im vorausgegangenen Verbrennungstakt des betreffenden Zylinders geschlossen werden. Das kann bei der Ansteuerung des betreffenden Zylinders genutzt werden. Entsprechende Möglichkeiten sind nicht mehr gegeben, wenn der Abgasstrom vermischt ist. Deshalb ist es zweckmäßig, die Messung stromaufwärts, möglichst unmittelbar am Abgasausgang des zugehörigen Zylinders vorzunehmen, also so dicht, wie dies die technischen Gegebenheiten, zum Beispiel die Temperaturempfindlichkeit des Meßgerätes, der Platzbedarf usw. zulassen.

Es genügt, wenn man in einer ersten Verbrennungstaktfolge eine Messung am Beginn eines ersten Ausstoßes eines Zylinders, in der nächstfolgenden zweiten Verbrennungstaktfolge am gleichen Zylinder die gleiche Messung aber etwas später, bezogen auf den Verbrennungstakt und so fort vornimmt, so daß man den zeitlichen Verlauf des betreffenden Meßwertes über die Verbrennungstaktfolge erst nach mehreren Verbrennungstakten gewinnt. Dabei geht man davon aus, daß die betroffenen Verbrennungstakte den gleichen zeitlichen Meßwertverlauf aufweisen - eine Voraussetzung, die im Rahmen der erforderlichen Meßgenauigkeit gegeben ist. Eine solche iterative Messung gestattet es, Meßgeräte einzusetzen, die diskontinuierlich arbeiten und eine gewisse Zeit zur Regeneration benötigen im Anschluß an jede Messung. Bei dem geschilderten Beispiel steht als Regenerationszeit eine Verbrennungstaktperiode zur Verfügung. Man kann die Regenerationszeit auch vergrößern, indem man die erste Messung des zeitlichen Verlaufs am ersten Verbrennungstakt, die nachfolgenden Messung jeweils fünf beziehungsweise n Verbrennungstakte später vornimmt und so fort.

Es empfiehlt sich, in jeder Einzelleitung den Abgasstrom einer katalytischen Nachverbrennung zu unterwerfen. Diese Nachverbrennung in den Einzelleitungen kann besser optimiert werden, als die bekannte Nachverbrennung in der Sammelleitung, weil sie sehr frühzeitig an den Abgasen angreift, unmittelbar nachdem diese aus dem Zylinder ausgestoßen werden. Für eine solche Optimierung empfiehlt es sich, daß die Abgase in den Einzelleitungen stromaufwärts und/oder stromabwärts der katalytischen Nachverbrennung vermessen werden. Dann kann mit den dadurch gewonnenen Meßwerten die katalytische Nachverbrennung zur Optimierung angesteuert werden.

Man kann aus den in den Einzelleitungen gewonnenen Meßwerten aller Zylinder einen kombinierten Meßwert errechnen und in Abhängigkeit von diesem kombinierten Meßwert die Verbrennung der Brennkraftmaschine ansteuern, also zum Beispiel Einstellungen vornehmen, die alle Zylinder betreffen, wie zum Beispiel die Drehzahl verändern, während man bei der Ansteuerung der Verbrennung der einzelnen Zylinder nur diesen Zylinder betreffende Einstellungen, zum Beispiel am Zündverzug, an der Brennstoffeinspritzung, an der Brennluftzufuhr oder dergleichen vornimmt.

Es empfiehlt sich, in der Sammelleitung das Abgas in an sich bekannter Weise, einer katalytischen Nachverbrennung zu unterwerfen, auch dann, wenn eine solche katalytische Nachverbrennung bereits in den Einzelleitungen vorgenommen worden ist. Bei den katalytischen Nachverbrennungen in den Einzelleitungen handelt es sich dann um eine zusätzliche katalytische Nachverbrennung. In Abhängigkeit von stromaufwärts und/oder stromabwärts von dieser katalytischen Nachverbrennung gewonnenen Meßwerten aus der Vermessung des in der Sammelleitung strömenden Abgases, kann die Verbrennung der Brennkraftmaschine angesteuert werden, gegebenenfalls in kombinierter Abhängigkeit von diesen Meßwerten und den oben erwähnten errechneten kombinierten Meßwerten.

Für die optimale Funktion der katalytischen Nachverbrennung wird eine Betriebstemperatur benötigt, die oberhalb einer Mindesttemperatur liegt. Diese Mindesttemperatur wird in den Abgasen aber erst nach Ablauf der Startphase erreicht. Aus diesem Grunde empfiehlt es sich, daß für die katalytischen Nachverbrennungen in der kalten Startphase in den Einzelleitungen und/oder in der Sammelleitung eine äußere Zusatzbeheizung vorgesehen ist, die in Abhängigkeit von den gewonnenen Meßwerten und/oder zeitabhängig angesteuert wird. Auf diese Weise kann sichergestellt werden, daß auch in der Startphase hinreichende katalytische Nachverbrennung stattfindet.

Die optimale Funktion der katalytischen Nachverbrennung ist nicht nur von der Temperatur, sondern auch von anderen Parametern des Abgases abhängig, so auch vom Sauerstoffgehalt des Abgases. Wenn der Sauerstoffgehalt des Abgases für die katalytische Nachverbrennung unzureichend ist, empfiehlt es sich, entsprechend Verbrennungsluft von außen in den Abgasstrom einzuführen und zwar stromaufwärts der zugehörigen katalytischen Nachverbrennung. Ist der Sauerstoffgehalt dagegen zu groß, dann wird die Verbrennung in der Brennkraftmaschine beziehungsweise in dem betreffenden Zylinder entsprechend umgesteuert, zum Beispiel durch Reduzieren der Verbrennungsluftzufuhr für die gesamte Brennkraftmaschine beZur Ausübung des erfinderischen Verfahrens werden in den Abgasleitungen Meßsonden benötigt. Diese kann man in die Abgasleitungen einbauen. Es empfiehlt sich aber eine andere Ausgestaltung, die dadurch gekennzeichnet ist, daß in einer Abgasleitung ein Zwischenflansch verschraubt ist und daß in dem Zwischenflansch eine oder mehrere Meßleitungen für zugehörige, im Zwischenflansch angeordnete Meßsonden zur Vermessung des Abgasstroms verlegt sind. Der Zwischenflansch bietet den Vorteil, daß man die Meßsonden mitsamt dem Zwischenflansch leicht austauschen oder nachrüsten kann, wenn sich das als erforderlich erweist.

Aus entsprechenden Gründen empfiehlt es sich, daß in einer Abgasleitung ein Zwischenflansch verschraubt ist und daß in dem Zwischenflansch eine nach außen führende Gasleitung mündet.

Die Erfindung wird nun anhand der beigefügten Zeichnung näher erläutert.

In der Zeichnung zeigt:
- Figur 1: schematisch eine Brennkraftmaschine zur Verwirklichung des Verfahrens nach der Erfindung,
- Figur 2 und 3: je ein Diagramm zum Betrieb dieser Brennkraftmaschine und
- Figur 4: ein Zwischenflansch im Schnitt.

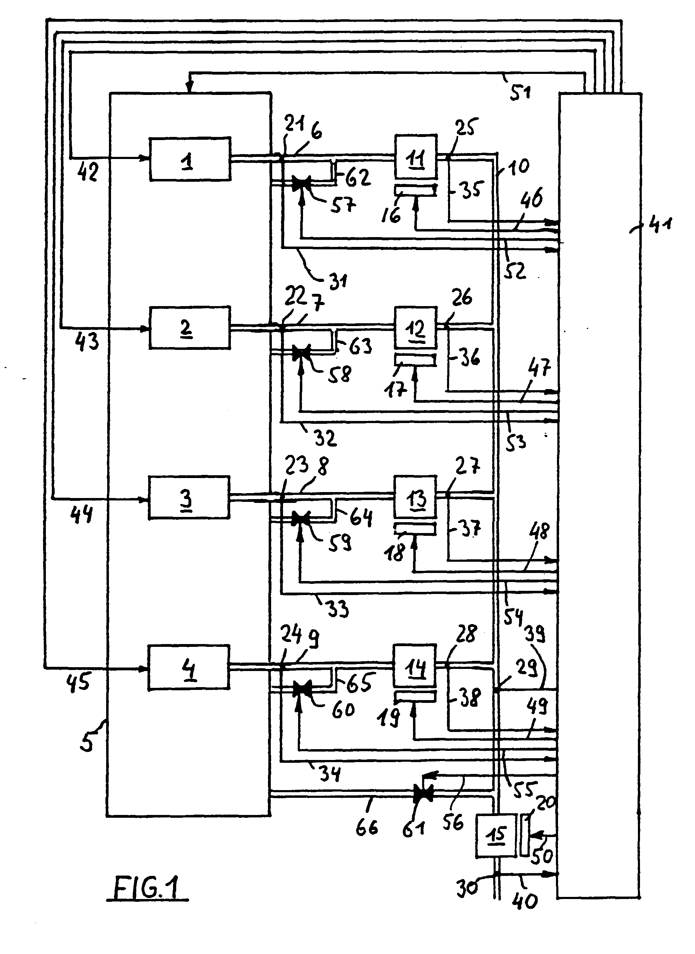

In Figur 1 ist mit 5 eine mit vier Zylindern 1 bis 4 ausgestattete Brennkraftmaschine bezeichnet. Die Abgase dieser Zylinder 1 bis 4 strömen über, den einzelnen Zylinder zugeordnete Einzelleitungen 6 bis 9 in eine Abgassammelleitung 10. In den Einzelleitungen 6 bis 8 ist je ein Katalysator 11 bis 14 vorgesehen und in der Sammelleitung ein Katalysator 15. Die Katalysatoren 11 bis 15 dienen zur katalytischen Nachverbrennung der Abgase. Den Katalysatoren sind Zusatzheizungen 16 bis 20 zugeordnet. In den Einzelleitungen 6, 7, 8 und 9 sind, stromaufwärts dicht hinter dem Austritt aus den zugehörigen Zylindern 1 bis 4 und stromaufwärts des zugehörigen Katalysators 11 bis 14, Meßsonden 21 bis 28 angeordnet. Weitere Meßsonden 29 und 30 sind stromaufwärts und stromabwärts des Katalysators 15 in der Abgassammelleitung 10 und zwar stromabwärts sämtlicher Einmündungen der Einzelleitungen angeordnet. Diese Meßsonden sind über Meßleitungen 31 bis 40 an ein Rechen- und Steuergerät 41 angeschlossen.

Von dem Rechen- und Steuergerät gehen diverse Steuerleitungen aus und zwar Steuerleitungen 42 bis 45 zur individuellen Ansteuerung der Verbrennung in den einzelnen Zylindern. Steuerleitungen 46, 47, 48, 49, 50 zur individuellen Ansteuerung der Zusatzheizungen 16 bis 20, eine Steuerleitung 51 zur Ansteuerung des Betriebes der Brennkraftmaschine 5 und Steuerleitungen 52 bis 56 zur Ansteuerung von Ventilen 57 bis 61.

Diese Ventile 57 bis 61 sind in Gasleitungen 62 bis 66 vorgesehen. Diese Gasleitungen münden in die Einzelleitungen und in die Sammelleitungen und zwar die Gasleitung 62 in die Einzelleitung 6, die Gasleitung 63 in die Einzelleitung 7, die Gasleitung 64 in die Einzelleitung 8, die Gasleitung 65 in die Einzelleitung 9 und die Gasleitung 66 in die Sammelleitung 10. Die Gasleitungen führen an die Verbrennungskraftmaschine 5 und sind dort in nicht dargestellter Weise an die Verbrennungsluftzufuhr angeschlossen, so daß bei geöffnetem zugehörigen Ventil, zum Beispiel dem Ventil 57, Verbrennungsluft in die zugehörige Leitung, zum Beispiel die Einzelleitung 6 strömt und zwar in einem Mengenfluß, der abhängig ist von dem Grad der Öffnung des betreffenden Ventils, das zu diesem Zweck differenziert öffenbar ist.

Die gezeichneten Meßsonden 21 bis 30 symbolisieren möglicherweise jede für sich mehrere Meßsonden, die dann über entsprechend vorgesehene, individuelle Meßleitungen an das Rechen- und Steuergerät 41 angeschlossen sind. Dabei handelt es sich um Meßsonden zum Messen von t, p, s und für den Gehalt an O₂, CO, HC und H₂O. Der Einfachheit halber wird nachfolgend immer nur von einer Meßsonde und einem zugehörigen Meßwert gesprochen, obwohl es sich an jeder Meßstelle um mehrere Meßgeräte für verschiedene Meßwerte handeln kann und entsprechend viele Meßwerte gewonnen werden.

Die in den Einzelleitungen gewonnenen Meßwerte dienen dazu, die Verbrennung in dem zugehörigen Zylinder und dem zugehörigen Katalysator anzusteuern zum Zwecke der Optimierung. Sie dienen außerdem dazu, kombinierte Meßwerte zu errechnen, die ebenso wie die in der Sammelleitung 10 gewonnenen Meßwerte oder anstelle dieser dazu dienen können, die Verbrennung in der Brennkraftmaschine 5 und in dem Katalysator 15 anzusteuern, zum Zwecke der Optimierung.

Die Ansteuerung der Verbrennung in den einzelnen Zylindern kann erfolgen durch individuelle Verstellung des Zündverzuges, der Einspritzung, der Verbrennungsluftzufuhr oder dergleichen. Die Ansteuerung der Verbrennung der Brennkraftmaschine kann erfolgen durch Verstellung des Zündvollzuges, der Einspritzung der Verbrennungsluftzufuhr, Drehzahländerung oder dergleichen.

Die Ansteuerung der Nachverbrennung in den Katalysatoren erfolgt durch Einstellung der zugehörigen Zusatzheizung 16 bis 20 und/oder der Verbrennungsluftzufuhr durch Einstellung der zugehöringen Ventile 57 bis 61.

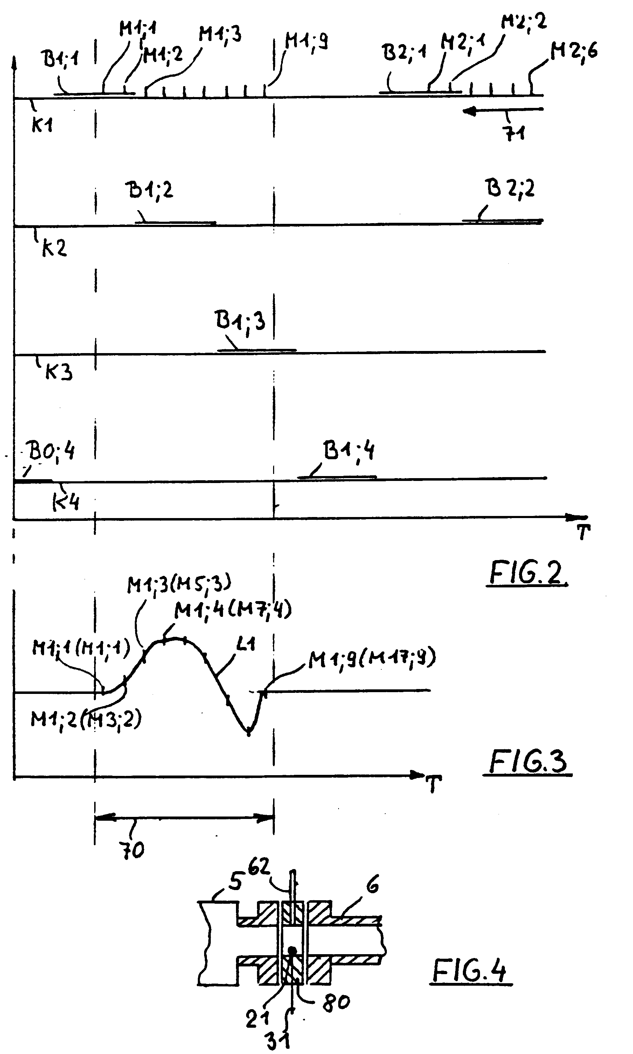

Die Meßwerte in der Sammelleitung 10 werden entweder kontinuierlich oder in einer hinreichenden Taktfolge gewonnen. Die Meßwerte in den Einzelleitungen werden in zeitlicher Abhängigkeit vom Verbrennungstaktverlauf gewonnen, wie dies im einzelnen nun anhand der Figuren 2 und 3 erläutert wird.

In beiden Diagrammen ist auf der waagerechten Achse die Zeit T aufgetragen und zwar in beiden Figuren im gleichen Maßstab. Die Kennlinien K1 bis K4 symbolisieren die Taktfolge der Zylinder 1 bis 4. Mit B1;1 ist der erste betrachtete Verbrennungszyklus des Zylinders 1 bezeichnet. Mit B1;2 ist der erste betrachtete Verbrennungszyklus des Zylinders 2 bezeichnet. Mit B2;1 ist der zweite betrachtete Verbrennungstakt des Zylinders 1 bezeichnet und so fort, wobei der erste Index jeweils fortlaufend den Verbrennungstakt angibt und der zweite Index den betreffenden Zylinder. Für den Verbrennunstakt B1;1 sind die zeitlich aufeinanderfolgenden Meßpunkte M1;1 bis M1;9 vorgesehen, die zeitlich gleichmäßig über einen, dem Verbrennungstakt B;1 zugeordneten Zeitabschnitt verteilt sind, wobei dieser Zeitabschnitt so bemessen ist, daß er die Zeit des zugehörigen Abgasausstoßes aus diesem Zylinder für den betrachteten Verbrennungstakt umfaßt. Der Ausstoß beginnt kurz vor dem M1;1 entsprechenden Zeitpunkt und ist beendet kurz nach dem M1;9 entsprechenden Zeitpunkt. In dem Meßabschnitt 70, der durch die Meßpunkte M1;1 bis M1;9 bestimmt ist, verändert sich die Abgasqualität an der Meßstelle des Meßorgans 21 in der Einzelleitung, bedingt durch den Ausstoß. Kurz danach stellen sich infolge Vermischung mehr oder weniger gleichbleibende Verhältnisse ein bis zum nächstfolgenden Meßabschnitt 71, der entsprechend dem nächstfolgenden Verbrennungstakt B2;1 zugeordnet ist. Die zeitliche Veränderung eines Meßwertes ist durch eine Kennlinie L1 in Figur 3 symbolisiert. Diese Kennlinie hat in dem Meßabschnitt 70 einen, grob gesagt, sinusförmigen Verlauf und ist anschließend bis zum nächsten Meßabschnitt etwa geradlinig. Dabei handelt es sich um eine sehr vergröberte und vereinfachte Darstellung, denn die tatsächliche gemessene Kennlinie L1 ist sehr viel variantenreicher. Sie ist auch unterschiedlich, je nachdem, was für ein Meßwert gemessen wird.
Der Kennlinienverlauf wiederholt sich bei gleichbleibendem Betrieb von Verbrennungstakt zu Verbrennungstakt und sieht für die anderen Zylinder ähnlich aus. Die Feinstruktur dieser Kennlinie gibt Aufschluß über den Verbrennungsvorgang in dem zugeordneten Zylinder und damit die Möglichkeit einer sehr differenzierten Nachsteuerung der Verbrennung im zugehörigen Zylinder beziehungsweise in der genannten Brennkraftmaschine und auch der zugeordneten Nachverbrennung. Um die Meßwerte M1;1 bis M1;9 zu ermitteln, wird ein sehr reaktionsschnelles Meßgerät benötigt. Das steht, angesichts der hohen Taktfolge in modernen Brennkraftmaschinen unter Umständen nicht zur Verfügung. Für diesen Fall behilft man sich mit einer verlängerten Taktfolge der Messungen, die unter der zulässigen Voraussetzung, daß mehrere aufeinanderfolgende Verbrennungsvorgänge in ein und demselben Zylinder im Rahmen der hier betrachteten Genauigkeit identisch verlaufen, vorgesehen sind.

Zur Erläuterung dessen werden die Meßpunkte der aufeinanderfolgenden Takte B1;1, B2;1, B3;1, .... Bn;1 wie folgt bezeichnet: Der erste Meßpunkt von B2;1 wird mit M2;1 bezeichnet, der nächste mit M2;2 und so fort bis M2;9. Die entsprechenden Meßpunkte des nächsten Taktes B3;1 werden mit M3;1 bis M3;9 bezeichnet und so fort, wobei der erste Index die laufenden Nummer des betrachteten Taktes und der zweite Index den Meßpunkt innerhalb des betreffenden Taktes bezeichnet. Es werden nun nicht die Meßpunkte M1;1 bis M1;9 ermittelt, sondern es wird die Kennlinie ermittelt, aufgrund der Meßpunkte M1;1, M3;1, M5;1, M7;1 und so fort bis M17;1, wie dies in Figur 3 in Klammern eingetragen ist. Zwischen dem Meßpunkt M1 und dem Meßpunkt M2 besteht ein zeitlicher Abstand von einem Bruchteil des Zylindertaktes. Zwischen den Meßpunkten M1;1 und M3;2 besteht ein zeitlicher Abstand der etwas größer ist als zwei Zylindertakte. Diesen Abstand kann man noch vergrößern, indem man statt auf zwei Zylindertakte, auf sehr viele Zylindertakte, zum Beispiel auf hundert Zylindertakte vergrößert. Dann ist der erste Meßpunkt für die Gewinnung der Kennlinie L1 M1;1, der zweite Meßpunkt M100;2 und so fort, oder allgemein gesagt: Die Kennlinie L1 wird gebildet aus Meßpunkten Mn;i.
mit
- n =: fortlaufende Zählung der Verbrennungstakte,
- i =: fortlaufende Zählung der Meßpunkte eines Verbrennungstaktes.

Man kann diesen zeitlichen Versatz für die einzelnen verschiedenen Messungen, zum Beispiel die Messung des O2-Gehaltes und die Messung der Temperatur für ein und denselben Zylinder unterschiedlich gestalten, entsprechend der unterschiedlichen Ansprechgeschwindigkeit und Erholungszeit der verschiedenen Meßgeräte.

Zum Anschluß der Meßgeräte und Prüfleitungen und/oder zum Anschluß der Verbrennungsluftzufuhr empfiehlt es sich, wie in Figur 4 dargestellt, einen Zwischenflansch 80 vorzusehen, der stromaufwärts der Einzelleitung 6 zwischen der Einzelleitung und dem zugehörigen Zylinder 1 verschraubt ist. Ein solcher Zwischenflansch 80 kann auch an einer anderen Position der Einzelleitung oder Sammelleitung verschraubt sein. In diesen Zwischenflansch mündet eine Prüfleitung 31, die an das, innerhalb des Flansches angeordnete Meßorgan 21 führt. Außerdem mündet in diesen Zwischenflansch die pneumatische Leitung 62. Das hat den Vorteil, daß man durch Ausschrauben des Zwischenflansches leicht zu Reparatur- und Servicezwecken an die Meßgeräte Zugang gewinnt. Außerdem ist ein solcher Zwischenflansch vorteilhaft bei einer eventuellen Nachrüstung.

## Patentansprüche

1. Verfahren zur katalytischen Nachverbrennung der Abgase einer mit mehreren Zylindern (1-4) ausgestatteten Brennkraftmaschine (5), bei der die Abgase über, den einzelnen Zylindern (1-4) zugeordnete Einzelleitungen (6-9), einer gemeinsamen Abgasleitung (10) zugeleitet dann einer katalytischen Nachverbrennung unterworfen werden und der Sauerstoffgehalt der Abgase in den Einzelleitungen (6-9) gemessen wird und in Abhängigkeit von den gewonnenen Meßwerten die Verbrennung in dem jeweils zugehörigen Zylinder (1-4) angesteuert wird,
**dadurch gekennzeichnet**,daß der zeitliche Verlauf der Meßwerte in den Einzelleitungen (6-9) für Temperatur t, Druck p, Strömungsgeschwindigkeit s, und für den Gehalt an Kohlenmonoxyd CO, Kohlenwasserstoff HC und/oder Wasserdampf H₂O, in zeitlicher Abhängigkeit vom Verbrennungstaktverlauf des jeweils zugeordneten Zylinders (1-4) gemessen und zur Ansteuerung genutzt wird.

2. Verfahren nach Anspruch 1, dadurch gekennzeichnet,
daß die Messung stromaufwärts Unmittelbar am Abgasaustritt des zugehörigen Zylinders (1-4) vorgenommen wird.

3. Verfahren nach Anspruch 1 oder 2, dadurch gekennzeichnet,
daß in jeder Einzelleitung (6-9) der Abgasstrom einer katalytischen Nachverbrennung unterworfen wird.

4. Verfahren nach Anspruch 3, dadurch gekennzeichnet,
daß die Abgase in den Einzelleitungen (6-9) stromaufwärts und stromabwärts der katalytischen Nachverbrennung vermessen werden.

5. Verfahren nach einem der vorhergehenden Ansprüche, dadurch gekennzeichnet,
daß aus den in den Einzelleitungen (6-9) gewonnen Meßwerten aller Zylinder (1-4) ein kombinierter Meßwert errechnet wird und
daß in Abhängigkeit von dem kombinierten Meßwert die Verbrennung der Brennkraftmaschine (5) angesteuert wird.

6. Verfahren nach einem der vorhergehenden Ansprüche, dadurch gekennzeichnet,
daß in der Sammelleitung (10) das Abgas einer katalytischen Nachverbrennung unterworfen wird und stromaufwärts und/oder stromabwärts dieser katalytischen Nachverbrennung in der Sammelleitung (10) vermessen wird und
daß in Abhängigkeit von den gewonnenen Sammelmeßwerten die Verbrennung der Brennkraftmaschine (5) angesteuert wird.

7. Verfahren nach einem der vorhergehenden Ansprüche, dadurch gekennzeichnet,
daß für die katalytische Nachverbrennung in der kalten Startphase in den Einzelleitungen (6-9) und/oder in der Sammelleitung (10) eine äußere Zusatzbeheizung (16-20) vorgesehen ist, die in Abhängigkeit von den gewonnenen Meßwerten und/oder zeitabhängig angesteuert wird.

8. Verfahren nach einem oder mehreren der vorhergehenden Ansprüche, dadurch gekennzeichnet,
daß in Abhängigkeit von gewonnenen Meßwerten stromaufwärts einer katalytischen Nachverbrennung Verbrennungsluft von außen, in den Abgasstrom zugeführt wird.

9. Vorrichtung zur Ausübung des Verfahrens nach einem oder mehreren der vorhergehenden Ansprüche, bestehend aus
- einer mit mehreren Zylindern (1-4) ausgestatteten Brennkraftmaschine (5), bei der die Abgase über, den einzelnen Zylindern (1-4) zugeordnete Einzelleitungen (6-9), einer gemeinsamen Abgasleitung (10) zugeleitet dann einer katalytischen Nachverbrennung unterworfen werden
- mit Sauerstoffsonden (21, ..), die den Sauerstoffgehalt der Abgase in den Einzelleitungen (6-9) messen und
- mit einem Rechen- und Steuergerät (41), das in Abhängigkeit von den gewonnenen Meßwerten die Verbrennung in dem jeweils zugehörigen Zylinder (1-4) ansteuert, wobei der zeitliche Verlauf der Meßwerte für den Gehalt an Sauerstoff (O₂) in zeitlicher Abhängigkeit vom Verbrennungstaktverlauf des jeweils zugeordneten Zylinders (1-4) gemessen und zur Ansteuerung genutzt wird,
**dadurch gekennzeichnet**, daß
- weiteren Meßsonden (21, ...) in den Einzelleitungen (6-9) angeordnet sind, zum Messen der Abgaswerte für Temperatur (t), Druck (p), Strömungsgeschwindigkeit (s) und für den Gehalt an Kohlenmonoxyd (CO), Kohlenwasserstoff (HC) und/oder Wasserdampf (H₂O),
- das Rechen- und Steuergerät (41) den zeitlichen Verlauf dieser Meßwerte in zeitlicher Abhängigkeit vom Verbrennungstaktverlauf des jeweils zugeordneten Zylinders (1-4) mißt und zur Ansteuerung nutzt
- in einer Abgasleitung (6, 10) ein Zwischenflansch (80) verschraubt ist und in dem Zwischenflansch mehrere Meßleitungen (31) für zugehörige, im Zwischenflansch angeordnete Meßsonden (21) zur Vermessung des Abgasstroms verlegt sind.

10. Vorrichtung nach Anspruch 9, dadurch gekennzeichnet,
daß in dem Zwischenflansch ( 80 ) eine nach außen führende Gasleitung ( 62 ) mündet.

## Claims

1. Process for the catalytic afterburning of the exhaust gases of an internal combustion engine (5) equipped with a plurality of cylinders (1-4), in which the exhaust gases are passed via individual lines (6-9) assigned to the individual cylinders (1-4) to a collective exhaust gas line (10), then subjected to a catalytic afterburning and the oxygen content of the exhaust gases is measured in the individual lines (6-9) and the combustion in each associated cylinder (1-4) is controlled as a function of the measured values obtained, characterized in that the time course of the measured values in the individual lines (6-9) for temperature t, pressure p, flow velocity s, and for the content of carbon monoxide CO, hydrocarbon HC and/or water vapour H₂O is measured as a time-dependent function of the course of the combustion cycle of each associated cylinder (1-4) and is used for the control.

2. Process according to Claim 1, characterized in that the measurement is made upstream directly at the exhaust gas outlet of the associated cylinder (1-4).

3. Process according to Claim 1 or 2, characterized in that the exhaust gas stream is subjected to a catalytic afterburning in each individual line (6-9).

4. Process according to Claim 3, characterized in that the exhaust gases are analyzed in the individual lines (6-9) upstream and downstream of the catalytic afterburning.

5. Process according to one of the preceding claims, characterized in that a combined measured value is calculated from the measured values obtained in the individual lines (6-9) and in that the combustion of the internal combustion engine (5) is controlled as a function of the combined measured value.

6. Process according to one of the preceding claims, characterized in that the exhaust gas is subjected to a catalytic afterburning in the manifold (10) and is analysed upstream and/or downstream of this catalytic afterburning in the manifold (10) and in that the combustion of the internal combustion engine (5) is controlled as a function of the collective measured values obtained.

7. Process according to one of the preceding claims, characterized in that an external auxiliary heater(16-20) is provided for the catalytic afterburning in the cold start phase in the individual lines (6-9) and/or in the manifold (10), which auxiliary heater is controlled as a function of the measured values obtained and/or in a time-dependent manner.

8. Process according to one or more of the preceding claims, characterized in that combustion air is fed from outside to the exhaust gas stream upstream of a catalytic afterburning, as a function of measured values obtained.

9. Apparatus for performing the process according to one or more of the preceding claims, consisting of
- an internal combustion engine (5) equipped with a plurality of cylinders (1-4), in which internal combustion engine the exhaust gases are passed, via individual lines (6-9) assigned to the individual cylinders (1-4), to a collective exhaust gas line (10), then are subjected to a catalytic afterburning,
- having oxygen probes (21, ...), which measure the oxygen content of the exhaust gases in the individual lines (6-9) and
- having a computer and controller (41) which controls the combustion in each associated cylinder (1-4) as a function of the measured values obtained, the time course of the measured values for the content of oxygen (O₂) being measured as a time-dependent function of the combustion cycle of each associated cylinder (1-4) and used for the control, characterized in that
- further measuring probes (21, ...) are arranged in the individual lines (6-9) for measuring the exhaust gas values for temperature (t), pressure (p), flow velocity (s) and for the content of carbon monoxide (CO), hydrocarbon (HC) and/or water vapour (H₂O),
- the computer and controller (41) measures the time course of these measured values as a time-dependent function of the combustion cycle course of each associated cylinder (1-4) and uses it for the control,
- an intermediate flange (80) is screwed into an exhaust gas line (6, 10) and in the intermediate flange there are laid a plurality of measuring leads (31) for associated measuring probes (21) arranged in the intermediate flange for analysing the exhaust gas stream.

10. Apparatus according to Claim 9, characterized in that an outwards-leading gas line (62) opens into the intermediate flange (80).

## Revendications

1. Procédé de post-combustion catalytique des gaz d'échappement d'un moteur à combustion interne (5), équipé de plusieurs cylindres (1 à 4), moteur pour lequel des gaz d'échappement sont dirigés par l'intermédiaire de conduites individuelles (6 à 9) associées aux différents cylindres (1 à 4) à une conduite d'échappement (10) commune, puis soumis à une post-combustion catalytique, et la teneur en oxygène des gaz d'échappement dans les conduites individuelles (6 à 9) étant mesurée et la combustion dans les différents cylindres (1 à 4) afférents étant commandés en fonction des valeurs de mesure obtenues, caractérisé en ce que l'évolution temporelle des valeurs de mesure dans les conduites individuelles (6 à 9) concernant la température t, la pression p, la vitesse d'écoulement s et la teneur en monoxyde de carbone CO, en hydrocarbure HC et/ou en vapeur d'eau H₂O étant mesurée concernant leur dépendance temporelle vis-à-vis de l'allure du cadencement de la combustion du cylindre (1 à 4) chaque fois associé, et étant utilisée pour la commande.

2. Procédé selon la revendication 1, caractérisé en ce que la mesure est effectuée en amont directement sur la sortie des gaz d'échappement du cylindre (1 à 4) afférent.

3. Procédé selon la revendication 1 ou 2, caractérisé en ce que le flux de gaz d'échappement, passant dans chaque conduite individuelle (6 à 9), est soumis à une post-combustion catalytique.

4. Procédé selon la revendication 3, caractérisé en ce que les gaz d'échappement sont mesurés dans les conduites individuelles (6 à 9) en amont et en aval de la post-combustion catalytique.

5. Procédé selon l'une des revendications précédentes, caractérisé en ce que l'on calcule, à partir des valeurs de mesure obtenues dans les conduites individuelles (6 à 9) de tous les cylindres (1 à 4), une valeur de mesure combinée et que l'on effectue la commande de la combustion du moteur à combustion interne (5), en fonction de la valeur de mesure combinée.

6. Procédé selon l'une des revendications précédentes, caractérisé en ce que, dans la conduite collectrice (10), les gaz d'échappement sont soumis à une post-combustion catalytique et l'on mesure en amont et/ou en aval de cette post-combustion catalytique, dans la conduite collectrice (10), et
on commande la combustion du moteur à combustion interne (5) en fonction des valeurs de mesure de collection obtenues.

7. Procédé selon l'une des revendications précédentes, caractérisé en ce qu'
on prévoit pour la post-combustion catalytique, dans la phase de démarrage à froid, dans les conduites individuelles (6 à 9) et/ou dans la conduite de collection (10), un chauffage additionnel extérieur (16 à 20) qui est commandé en fonction des valeurs de mesure obtenues et,ou en fonction du temps.

8. Procédé selon l'une ou plusieurs des revendications précédentes, caractérisé en ce que,
en fonction des valeurs de mesure obtenues, on amène depuis l'extérieur de l'air de combustion, dans le flux de gaz d'échappement, en amont d'une post-combustion catalytique.

9. Procédé de mise en oeuvre du procédé selon l'une ou plusieurs des revendications précédentes, constitué :
- d'un moteur à combustion (5) équipé de plusieurs cylindres (1 à 4), moteur pour lequel les gaz d'échappement sont dirigés par des conduites individuelles (6 à 9) associées aux différents cylindres (1 à 4) vers une conduite d'échappement commune (10), puis soumis à une post-combustion catalytique,
- avec des sondes à oxygène (21, ..) qui mesurent la teneur en oxygène des gaz d'échappement dans les conduites individuelles (6 à 9), et
- avec un appareil de calcul et de commande (41) qui, en fonction des valeurs de mesure obtenues, commande la combustion dans les cylindre (1 à 4) afférents respectifs, l'évolution temporelle des valeurs de mesure concernant la teneur en oxygène (O₂), selon une fonction temporelle vis-à-vis de l'allure du cadencement de combustion du cylindre (1 à 4) chaque fois associé, étant mesurée et utilisée pour la commande,
caractérisé en ce que
d'autres sondes de mesure (21, ...) sont disposées dans les conduites individuelles (6 à 9), pour effectuer la mesure des valeurs concernant les gaz d'échappement concernant la température (t), la pression (p), la vitesse d'écoulement (s) et la teneur en monoxyde de carbone CO, en hydrocarbure (HC) et/ou en vapeur d'eau (H₂O),
- l'appareil de calculs et de commande (41) mesure l'évolution temporelle de ces valeurs de mesure, selon une relation temporelle vis-à-vis de l'allure du cadencement de combustion du cylindre (1 à 4) chaque fois associé et l'utilise pour la commande,
- dans une conduite de gaz d'échappement (6 à 10), est montée par vissage une prise intermédiaire (80) et, dans la bride intermédiaire, sont placées plusieurs conduites de mesure (31) concernant des sondes de mesure (21) afférentes, disposées dans la bride intermédiaire, pour effectuer la mesure sur le flux de gaz d'échappement.

10. Dispositif selon la revendication 9, caractérisé en ce qu'une conduite de gaz (62) menant à l'extérieur débouche dans la tubulure intermédiaire (80).
